(19) Europäisches Patentamt / European Patent Office / Office européen des brevets

(11) **EP 4 593 441 A1**

(12) **EUROPEAN PATENT APPLICATION**
published in accordance with Art. 153(4) EPC

(43) Date of publication:
**30.07.2025 Bulletin 2025/31**

(21) Application number: **23886152.0**

(22) Date of filing: **27.10.2023**

(51) International Patent Classification (IPC):
**H04W 16/02** (2009.01)  **H04W 52/22** (2009.01)
**H04L 1/00** (2006.01)  **H04W 84/12** (2009.01)

(52) Cooperative Patent Classification (CPC):
**H04L 1/00; H04W 16/02; H04W 52/22; H04W 84/12**

(86) International application number:
**PCT/KR2023/016916**

(87) International publication number:
**WO 2024/096456 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.11.2022 KR 20220145488**
**05.12.2022 KR 20220168109**

(71) Applicant: **Samsung Electronics Co., Ltd.**
**Suwon-si, Gyeonggi-do 16677 (KR)**

(72) Inventors:
• **YANG, Changmok**
**Suwon-si, Gyeonggi-do 16677 (KR)**
• **KIM, Taeyong**
**Suwon-si, Gyeonggi-do 16677 (KR)**

• **MIN, Hyunkee**
**Suwon-si, Gyeonggi-do 16677 (KR)**
• **PARK, Wonbin**
**Suwon-si, Gyeonggi-do 16677 (KR)**
• **YUN, Jusik**
**Suwon-si, Gyeonggi-do 16677 (KR)**
• **JUNG, Junyeop**
**Suwon-si, Gyeonggi-do 16677 (KR)**
• **CHOI, Junsu**
**Suwon-si, Gyeonggi-do 16677 (KR)**
• **CHOI, Hyeonu**
**Suwon-si, Gyeonggi-do 16677 (KR)**

(74) Representative: **HGF**
**HGF Limited**
**1 City Walk**
**Leeds LS11 9DX (GB)**

(54) **ELECTRONIC DEVICE AND SPATIAL REUSE TRANSMISSION METHOD**

(57)    An electronic device according to various embodiments of the present disclosure may comprise: an antenna; a communication module that supports wireless LAN communication; and a processor operatively connected to the antenna and the communication module. The processor may be configured to: be connected to a first access point of a first basic service set (BSS) to perform wireless LAN communication by using the communication module; while connected to the first access point, receive a signal transmitted from at least one device belonging to a second BSS having coverage of which at least portion overlaps the coverage of the first BSS; on the basis of the signal received from the second BSS, identify whether or not spatial reuse transmission is possible to the first access point in an environment in which the first BSS and the second BSS overlap each other; if the spatial reuse transmission is possible, determine the optimal value of transmission power of the antenna during the spatial reuse transmission; and perform, by using the antenna, the spatial reuse transmission to the first access point according to the determined optimal value of the transmission power.

FIG. 7

## Description

[Technical Field]

Various embodiments of the disclosure relate to an electronic device, for example, an electronic device supporting wireless LAN communication and a method for spatial reuse transmission of the electronic device.

[Background Art]

An electronic device such as a smartphone, a tablet PC, or a laptop PC may support various wireless communication methods, and higher-speed wireless communication technology is required to improve user experience. For example, electronic devices may support wireless local area network (WLAN) communication for high-speed wireless connection. Wireless LAN communication may be commonly referred to as Wi-Fi, and the communication standard is specified in the IEEE 802.11 standard. Wireless LAN communication may build a network environment from a hub (e.g., an access point) to each electronic device by using wireless radio waves rather than wired cables in indoor and limited outdoor environments. Since an electronic device may easily access a network without cables and installation of the network is simple, the use of wireless LAN communication is continuously increasing, and the types and number of electronic devices that support wireless LAN communication may also increase. Initial wireless LAN communication had a rather low transmission rate, but with technological advancements, the transmission rate is now improving enough to watch large-capacity videos in real time, and the transmission delay is also decreasing.

As the use of wireless LAN communication increases, the number of access points (APs) is also increasing to meet the demand. For example, a large number of access points may be installed in a dense space where wireless LAN demand is high, and since the large number of access points share limited wireless resources, interference and/or collisions between signals may occur, resulting in a decrease in the performance of wireless LAN communication. In particular, since wireless LAN communication is basically a method in which all access points and electronic devices independently and/or competitively secure transmission opportunities, the performance may decrease as the number of access points and electronic devices in the same space increases.

[Disclosure of Invention]

[Technical Problem]

Spatial reuse transmission may be considered to allow multiple electronic devices to transmit wireless LAN signals simultaneously in a situation where multiple basic service sets (BSS) exist in a limited space. Spatial reuse is standardized in Wi-Fi 6 (IEEE 802.11ax). OBSS-PD (overlapping basic service set - packet detection) spatial reuse transmission is a technique that allows each device to transmit simultaneously even when multiple BSSs are adjacent to each other. In order for an electronic device to reduce the influence on adjacent BSSs when transmitting OBSS-PD spatial reuse transmission, it is necessary to reduce the transmission power of the signal.

[Solution to Problem]

An electronic device according to the disclosure (or specification, invention) may include an antenna, a communication module supporting wireless LAN communication, and a processor operatively connected to the antenna and the communication module.

According to various embodiments, the processor may be configured to perform wireless LAN communication by being connected to a first access point of a first basic service set (BSS) by using the communication module, receive a signal transmitted from at least one device belonging to a second BSS having coverage of which at least a portion overlaps the coverage of the first BSS while connected to the first access point, identify whether spatial reuse transmission to the first access point is possible in an environment in which the first BSS and the second BSS overlap each other, based on the signal received from the second BSS, determine the optimal value of the transmission power of the antenna during the spatial reuse transmission when the spatial reuse transmission is possible, and perform spatial reuse transmission to the first access point by using the antenna according to the determined optimal value of the transmission power.

According to various embodiments, in order to determine the optimal value of the transmission power of the antenna, the processor may be configured to configure an initial value of the transmission power of the antenna, transmit a signal to the first access point through the antenna with a transmission power lower than the initial value when the signal transmission with the transmission power of the initial value to the first access point is successful, and determine the optimal value of the transmission power based on the transmission power at previous successful signal transmission when the signal transmission to the first access point fails.

[Advantageous Effects of Invention]

According to various embodiments of the disclosure, by optimizing antenna transmission power during OBSS-PD spatial reuse transmission, an electronic device and a spatial reuse transmission method of the electronic device that may improve communication performance, reduce the impact on adjacent BSS, and/or save power consumption may be provided.

[Brief Description of Drawings]

FIG. 1 is a block diagram of an electronic device in a network environment according to various embodiments.
FIG. 2 illustrates a wireless LAN network environment according to various embodiments.
FIG. 3 is a block diagram of an electronic device according to various embodiments.
FIG. 4 illustrates a basic operation of OBSS-PD spatial reuse transmission according to various embodiments.
FIG. 5 is a graph of a threshold value of spatial reuse transmission according to the transmission power of an antenna according to various embodiments.
FIG. 6 is a flowchart of a method for minimizing transmission power during spatial reuse transmission by an electronic device according to various embodiments.
FIG. 7 illustrates an operation for minimizing transmission power during spatial reuse transmission by an electronic device according to various embodiments.
FIG. 8 is a flowchart of a method for determining a communicable transmission power during spatial reuse transmission by an electronic device according to various embodiments.
FIG. 9 illustrates an operation for determining a communicable transmission power during spatial reuse transmission by an electronic device according to various embodiments.

[Mode for the Invention]

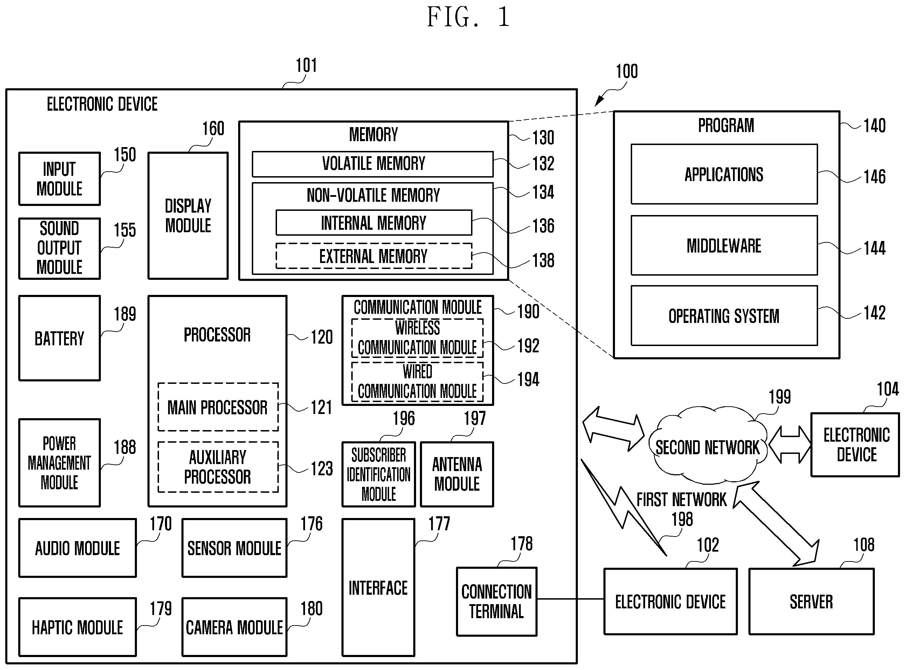

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).

According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

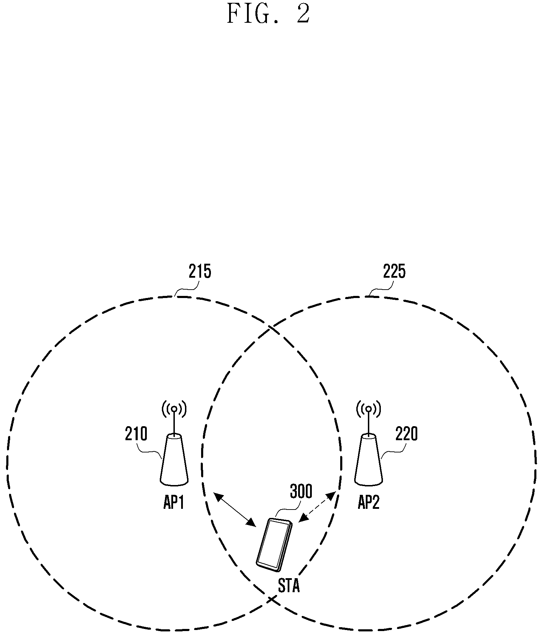

FIG. 2 illustrates a wireless LAN network environment according to various embodiments.

Referring to FIG. 2, a first BSS including a first access point (AP1) 210 and a second BSS including a second access point (AP2) 220 may be located adjacent to each other, and at least a portion of the coverage 215 of the first access point 210 and the coverage 225 of the second access point 220 may overlap each other. In the disclosure, a basic service set (BSS) is a configuration unit of a wireless LAN network, and may mean a logical network in which a specific access point and at least one station connected to the specific access point are combined. The coverage of a specific BSS may be defined as the coverage of the access point, and the size of the coverage may be determined according to the RF environment. Although two BSSs are illustrated in FIG. 2, an additional BSS adjacent to the BSS may be located, and although only one electronic device (or station, STA) is illustrated, an additional electronic device may be located, and may belong to the first BSS, the second BSS, or a BSS not illustrated.

According to an embodiment, an electronic device 300 (or STA) may be connected to the first access point 210 while being located within the coverage 215 of the first access point 210. For example, after scanning the first access point 210, the electronic device 300 may form a wireless LAN link with the first access point 210 through authentication request, association request, and 4-way handshake. When the electronic device 300 is currently connected to the first access point 210, the first BSS may be referred to as a local basic service set (BSS), and the adjacent second BSS may be referred to as an overlapping basic service set (OBSS).

According to various embodiments, each device (e.g., the electronic device 300, the first access point 210, and the second access point 220) in a wireless LAN network environment may support spatial reuse (SR) based on the overlapping basic service set-packet detection (OBSS-PD). IEEE 802.11's medium access control (MAC) protocol may consider the simultaneous occurrence of two or more signal transmissions as a collision, and accordingly, access points (e.g., the first access point 210 and the second access point 220) and stations (e.g., electronic device 300) may use channels through contention. For example, access points and stations may communicate with each other based on carrier sense multiple access (CSMA) and/or collision affordance (CA), and as a result, other access points or stations may delay transmission while a specific access point transmits a signal to a specific station. Such collisions may frequently occur in an environment where multiple BSSs overlap, thereby limiting the overall performance (e.g., throughput) of the wireless LAN network environment. Spatial reuse is a method to allow for simultaneous transmissions that collide with each other in an environment where multiple BSSs overlap. For example, spatial reuse operation is based on dynamically adjusting the clear channel assessment (CCA) level, so that even if a signal stronger than the existing carrier sense (CS) threshold is received from the OBSS, the channel state is determined to be an idle state and simultaneous transmission is possible.

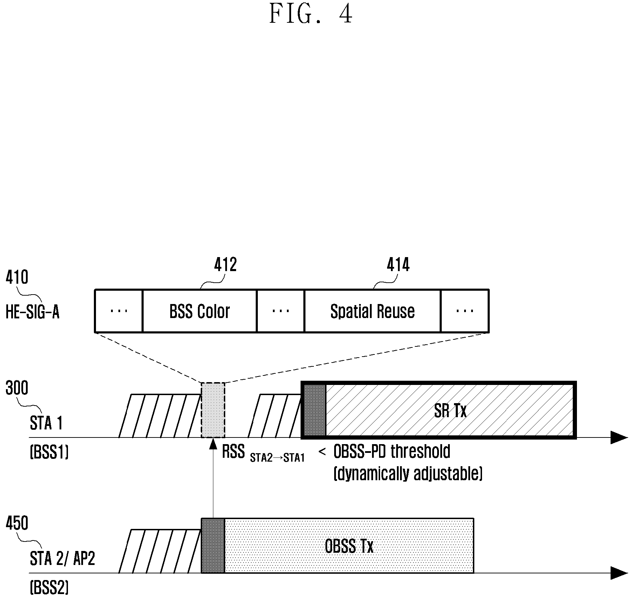

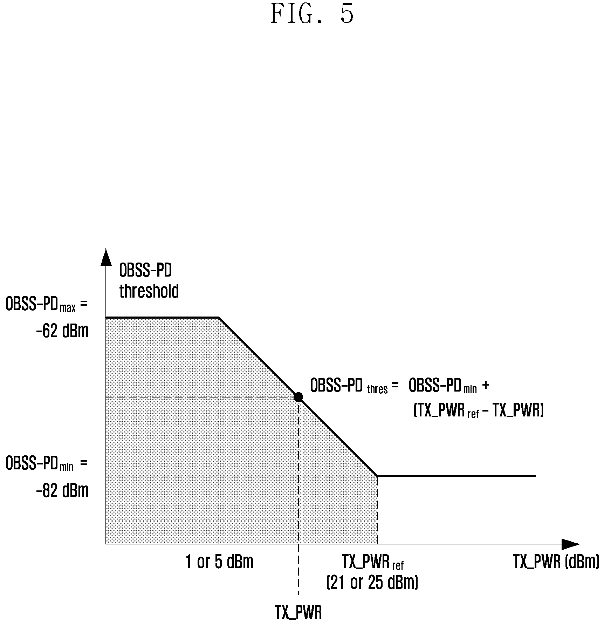

Referring to FIG. 2, when the electronic device 300 is located in an area where the coverage of the first access point 210 and the coverage of the second access point 220 overlap while forming a wireless LAN link with the first access point 210, the electronic device 300 may detect a signal transmitted from the second access point 220. In this case, the electronic device 300 may determine whether to trigger spatial reuse transmission based on the preamble of the frame transmitted from the second access point 220, the intensity of the signal received from the second access point 220, and the transmission power of the antenna of the electronic device 300. A method for triggering OBSS-PD-based spatial reuse transmission is described in more detail with reference to FIGS. 4 and 5.

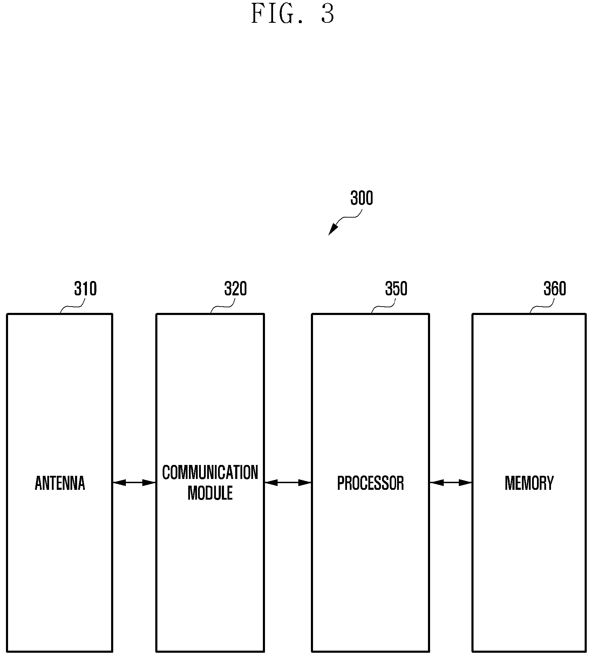

FIG. 3 is a block diagram of an electronic device according to various embodiments.

Referring to FIG. 3, the electronic device 300 (e.g., the electronic device 101 of FIG. 1) may include an antenna 310 (e.g., the antenna module 197 of FIG. 1), a communication module 320 (e.g., the communication module 190 of FIG. 1), a processor 350 (e.g., the processor 120 of FIG. 1) and a memory 360 (e.g., the memory 130 of FIG. 1) and may implement various embodiments of the disclosure even if some of the illustrated configurations are omitted or substituted. The electronic device 300 may further include at least some of the configurations and/or functions of the electronic device 101 of FIG. 1.

According to various embodiments, the antenna 310 may transmit a signal to an external device (e.g., the first access point 210 or the second access point 220 of FIG. 2) or may receive a signal transmitted from the external device. The electronic device 300 may include multiple antennas, and each antenna may support a different frequency band. The electronic device 300 may use at least one of the multiple antennas 310 for wireless LAN communication, and at least one of the multiple antennas 310 used for wireless LAN communication may be used for another wireless communication technology (e.g., Wi-Fi or Bluetooth) that uses the same frequency band (e.g., 2.4Gz). The antenna 310 may include at least some of the configurations and/or functions of the antenna module 197 of FIG. 1.

According to various embodiments, the communication module 320 may perform wireless LAN communication with an external device (e.g., the first access point 210 or the second access point 220 of FIG. 2). The communication module 320 may establish a wireless communication channel with the access point and support data transmission/reception through the established wireless communication channel. In addition to wireless LAN communication, the communication module 320 may also support other types of wireless communication such as cellular communication (e.g., 4G LTE or 5G NR) and Bluetooth. The communication module 320 may further include at least some of the configuration and/or functions of the communication module 190 of FIG. 1.

According to various embodiments, the memory 360 may include a known volatile memory and a non-volatile memory. The memory 360 may store various instructions that may be executed in the processor 350. Such instructions may include control commands such as arithmetic and logical operations, data movement, input/output, and the like that may be recognized by the processor 350. The memory 360 may include at least some of the configurations and/or functions of the memory 130 of FIG. 1, and may store at least a portion of the program 140 of FIG. 1.

According to various embodiments, the processor 350 is a component capable of controlling each component of the electronic device 300 and/or performing operations or data processing related to communication, and may include at least some of the configurations of the processor 350 of FIG. 1. The processor 350 may be operatively, electrically and/or functionally connected to internal components of the electronic device 300, such as the antenna 310, the communication module 320, or the memory 360.

According to various embodiments, there is no limitation to the operation and data processing functions that the processor 350 may implement within the electronic device 300, but in the disclosure, various embodiments for determining the optimal value of the transmission power of the antenna 310 or the minimum value of the transmittable transmission power when transmitting overlapping basic service set-packet detection (OBSS-PD)-based spatial reuse (SR) will be described. At least some of the operations of the processor 350 to be described later may be performed by executing instructions stored in the memory 360. According to an embodiment, the electronic device 300 may include a communication processor (not shown) that operates independently of the processor 350, and at least some of the operations of the processor 350 to be described later may be performed by the communication processor.

Hereinafter, various embodiments for the electronic device 300 (or the processor 350) triggering an OBSS-PD-based spatial reuse operation and determining the optimal value of the transmission power of the antenna 310 during spatial reuse transmission will be described when the electronic device 300 is located in a wireless LAN environment (e.g., FIG. 2) in which multiple BSSs overlap.

According to various embodiments, the processor 350 may perform wireless LAN communication by being connected to the first access point (e.g., the first access point 210 of FIG. 2) of the first basic service set by using the communication module 320. For example, when the electronic device 300 is located within the coverage of the first access point (e.g., the coverage 215 of the first access point 210 of FIG. 2), the processor 350 may identify the first access point through a scan and attempt to connect to the first access point through an authentication, association, and 4-way handshake process. As illustrated in FIG. 2, at least a portion of the first BSS may overlap the second BSS spatially. The first BSS to which the electronic device 300 belongs may be referred to as a local BSS, and the second BSS overlapping the first BSS may be referred to as an OBSS.

According to various embodiments, the processor 350 may receive a signal transmitted from at least one device belonging to the second BSS while connected to the first access point. For example, the electronic device 300 may receive a signal transmitted from the second access point of the second BSS (e.g., the second access point 220 of FIG. 2) or another electronic device (or station) connected to the second access point.

According to various embodiments, the processor 350 may identify whether spatial reuse transmission to the first access point is possible in an environment in which the first BSS and the second BSS overlap each other, based on the signal received from the second BSS. Spatial reuse is a method that allows for the simultaneous occurrence of transmissions that collide with each other in an environment where multiple BSSs overlap, as described with reference to FIG. 2.

According to an embodiment, the processor 350 may identify whether spatial reuse transmission is possible based on the value of the preamble of the signal transmitted from the second BSS. For example, the electronic device 300 may identify the BSS color field in the HE-SIG-A field of the preamble of the received signal. Here, the BSS color field may include an identifier capable of distinguishing several BSSs on the RF channel, and the electronic device 300 may identify, from the value of the BSS color field, whether the signal is transmitted from the first BSS (or local BSS) to which the electronic device 300 belongs or from the second BSS (or OBSS). In addition, the electronic device 300 may identify whether the second BSS supports spatial reuse in the spatial reuse field of the HE-SIG-A field.

According to an embodiment, the processor 350 may identify whether the current RF channel is in an idle state based on the intensity of the received signal. For example, the electronic device 300 may apply an OBSS-PD threshold value higher than the existing (or non-supporting spatial reuse) carrier sense (CS) threshold value (e.g., -82 dBm) to determine the channel state as an idle state when a signal having an intensity lower than the OBSS-PD threshold is detected. The OBSS-PD threshold value triggering spatial reuse transmission may be adjusted based on the transmission power of the antenna 310 of the electronic device 300. The OBSS-PD threshold value according to the transmission power of the antenna 310 will be described in detail with reference to FIG. 5.

According to various embodiments, when it is identified that spatial reuse transmission to the first access point is possible, the processor 350 may determine the optimal value of the transmission power of the antenna 310 during spatial reuse transmission. Here, the optimal value of the transmission power of the antenna 310 may be the minimum value of the transmission power of the antenna 310 capable of communicating with OBSS during spatial reuse transmission. Since OBSS may be affected when spatial reuse is transmitted, it is necessary to configure the intensity of the output signal to be low, and when the transmission power of the antenna 310 is configured to be low, current consumption may also be reduced. Accordingly, the optimal value of the transmission power of the antenna 310 may be the minimum value with which smooth spatial reuse transmission to the first access point is possible.

According to various embodiments, the processor 350 may configure an initial value of the transmission power of the antenna 310. According to an embodiment, the initial value of the transmission power of the antenna 310 may be determined based on the transmission power during a signal transmission to the first access point before detecting the signal of the second BSS and/or the transmission power during previous spatial reuse transmission, or may be an arbitrarily determined default value.

According to various embodiments, the processor 350 may determine an initial value of a modulation coding scheme (MCS) level. According to an embodiment, the initial value of the MCS level may be determined based on the MCS level used during a signal transmission to the first access point before detecting the signal of the second BSS and/or the MCS level used during previous spatial reuse transmission. In the wireless LAN standard (e.g., IEEE 802.11ax), the MCS indices are defined as 0 to 11, and the electronic device 300 may support at least some of 0 to 11 defined in the standard.

According to various embodiments, the processor 350 may transmit a signal to the first access point with the transmission power of the initial value. According to an embodiment, the electronic device 300 may transmit a packet including a small amount of data, such as a single MAC protocol data unit (MPDU) or a null data packet (NDP).

According to various embodiments, the processor 350 may identify whether the signal transmission to the first access point is successful. For example, when a response transmitted from the first access point is received in response to transmission of the single MPDU or NDP, the electronic device 300 may identify that the transmission has been successful.

According to various embodiments, when the signal transmission to the first access point is successful, the processor 350 may lower the transmission power by one step from the initial value of the previous transmission. For example, one step of transmission power may be in units of 1 dBm, but is not limited thereto. The electronic device 300 may transmit a signal including the single MPDU or NDP again with the transmission power configured to one step lower value (e.g., 1 dBm lower). According to various embodiments, the processor 350 may retransmit the signal by lowering the transmission power by one step whenever signal transmission is successful.

According to various embodiments, the processor 350 may determine the optimal value (or the minimum value of the transmission power of the antenna 310 capable of communicating with the OBSS during spatial reuse transmission) of the transmission power based on the transmission power at previous successful signal transmission when the signal transmission to the first access point fails.

According to various embodiments, when the signal transmission to the first access point fails in a state where the transmission power of the antenna 310 is configured to a first intensity and the MCS level is configured to a first level, the processor 350 may change the MCS level to a second level which is one step lower than the first level, and transmit the signal modulated to the MCS level of the second level to the first access point with the transmission power of the first intensity. When the modulation of the second level and the signal transmission with the transmission power of the first intensity is successful, the processor 350 may determine the first intensity as the optimal value of the transmission power of the antenna 310. In addition, the electronic device 300 may determine the second level as the optimal value of the MCS level.

According to various embodiments, when the modulation of the second level and the signal transmission with the transmission power of the first intensity fail, the processor 350 may determine a second intensity, which is one step higher than the first intensity, as the optimal value of the transmission power. In this case, the processor 350 may determine the first level, which is the MCS level at which previous transmission is successful, as the optimal value of the MCS level.

According to various embodiments, the processor 350 may test whether transmission is successful by lowering the MCS level by only one step in the process of determining the optimal value. This is to minimize the decrease in signal transmission rate (or throughput) when lowering the MCS level.

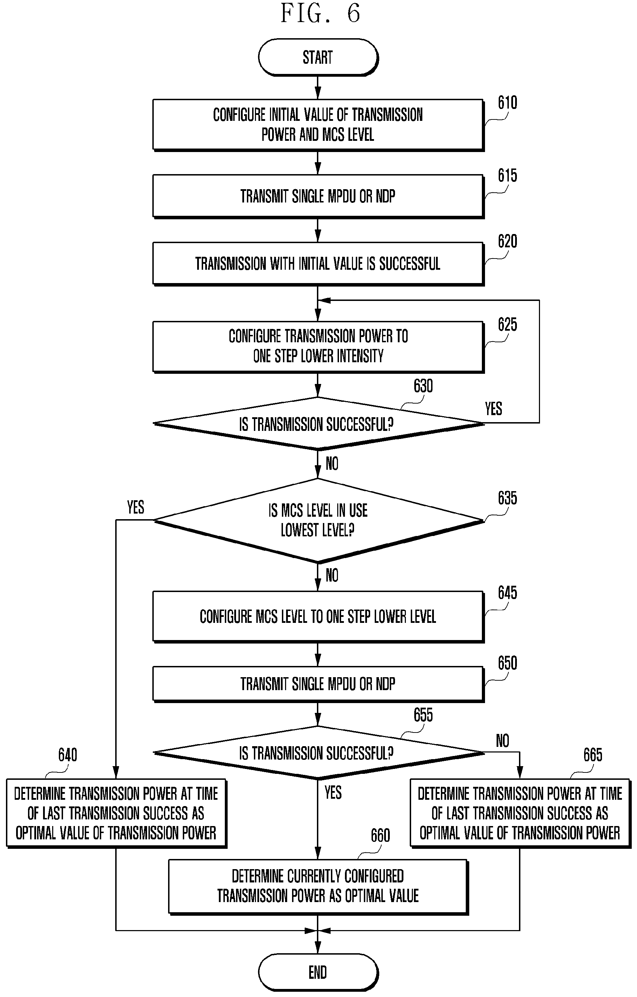

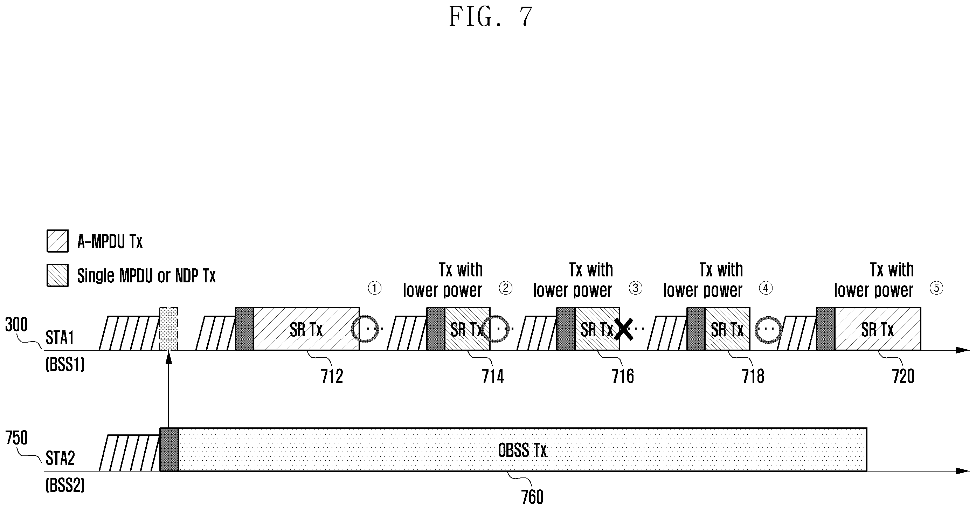

When the spatial reuse transmission to the first access point is successful, the operation for determining the optimal value of lower transmission power will be described in more detail with reference to FIGS. 6 and 7.

According to various embodiments, value when the signal transmission with the transmission power of the initial value to the first access point fails, the processor 350 may modulate a signal by configuring the MCS level to a level one step lower than the initial value, and retransmit the modulated signal with the transmission power of the initial value. When retransmission fails as a result of the retransmission, the processor 350 may retransmit the signal with one step higher transmission power. The processor 350 may retransmit the signal with one step higher transmission power and then determine the transmission power of the first successful transmission as the optimal value.

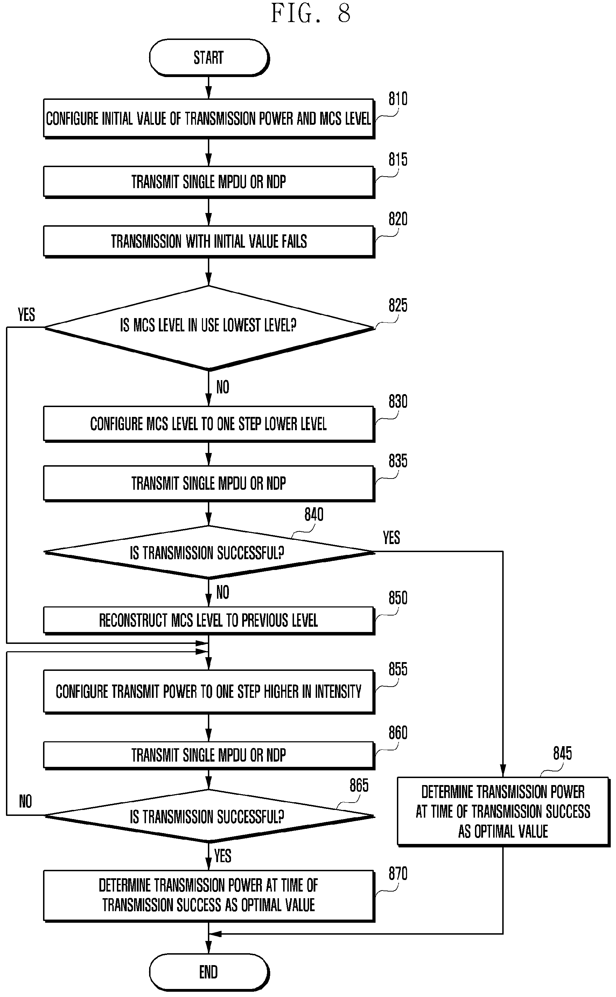

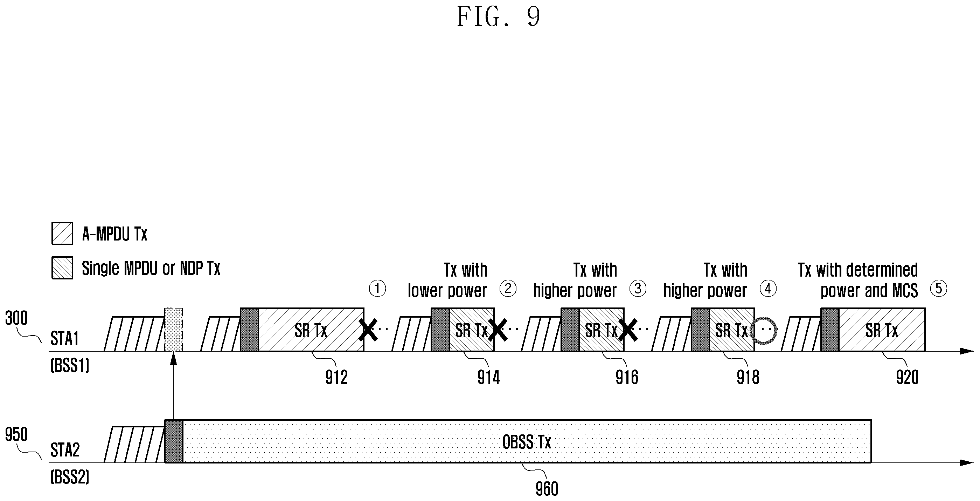

When the spatial reuse transmission to the first access point fails, an operation for determining the optimal value of the transmission power capable of spatial reuse transmission will be described in more detail with reference to FIGS. 8 and 9.

According to various embodiments, the processor 350 may transmit a signal based on spatial reuse to the first access point according to the determined transmission power and optimal value of the MCS level. For example, the electronic device 300 may transmit a signal including an aggregated-MAC protocol data unit (A-MPDU) to the first access point for data communication.

FIG. 4 illustrates a basic operation of OBSS-PD spatial reuse transmission according to various embodiments.

The electronic device 300 (e.g., the electronic device 300 of FIG. 3) may be located in an environment in which multiple BSSs (e.g., the first BSS and the second BSS of FIG. 2) overlap, and may be in a state in which a wireless LAN connection is established with a first access point (e.g., the first access point 210 of FIG. 2) of the first BSS. The electronic device 300 may receive a signal transmitted from a second access point (e.g., the second access point 220 of FIG. 2) belonging to the second BSS 450 which is an overlapping basic service set (OBSS) or another electronic device while in a state of establishing a wireless LAN connection with the first access point.

According to various embodiments, the electronic device 300 may detect a preamble (or PHY header) of a frame transmitted from the second BSS 450 in a state of performing wireless LAN communication with the first access point, and may identify whether the signal is transmitted from the first access point or the second access point (or another electronic device) of the second BSS 450. For example, the electronic device 300 may identify a BSS color field 412 in an HE-SIG-A field 410 of the preamble of the received signal. The BSS color field 412 may include an identifier capable of distinguishing several BSSs on the RF channel, and the electronic device 300 may identify whether the signal is transmitted from the local BSS to which the electronic device 300 belongs or from an OBSS from the value of the BSS color field 412. In addition, the electronic device 300 may identify whether the OBSS supports spatial reuse in a spatial reuse field 414 of the HE-SIG-A field 410.

According to various embodiments, when the received signal is a signal transmitted from the second BSS 450 and is identified to support spatial reuse, the electronic device 300 may identify whether the current RF channel is in an idle state based on the intensity of the received signal. For example, the electronic device 300 may apply an OBSS-PD threshold value higher than an existing (or when spatial reuse is not supported) carrier sense (CS) threshold value (e.g., -82 dBm) to determine the channel state as an idle state when a signal having an intensity lower than the OBSS-PD threshold value is detected. In this way, when the channel state is determined to be an idle state, the electronic device 300 may transmit a signal to the first access point based on spatial reuse, and in this case, the signal transmission of the electronic device 300 may at least partially overlap the signal transmission of the OBSS in time.

According to various embodiments, the OBSS-PD threshold value triggering spatial reuse transmission may be adjusted based on the transmission power of the antenna of the electronic device 300.

FIG. 5 is a graph of a threshold value of spatial reuse transmission according to the transmission power of an antenna according to various embodiments.

According to various embodiments, the OBSS-PD threshold value (OBSS-PD$_{thres}$) triggering spatial reuse transmission may be dynamically adjusted between the OBSS-PD minimum threshold value (OBSS-PD$_{min}$) (e.g., -82 dBm) and the OBSS-PD maximum threshold value (e.g., -62 dBm). The OBSS-PD threshold value may be determined as shown in Equation 1 below.

[Equation 1]

$$\text{OBSS-PD}_{thres} = \text{OBSS-PD}_{min} + (\text{TX\_PWR}_{ref} - \text{TX\_PWR})$$

In Equation 1, OBSS-PD$_{min}$ may be a predetermined OBSS-PD minimum threshold value, TX_PWR$_{ref}$ may be a reference value of the transmission power of the antenna (e.g., the antenna 310 of FIG. 3) of an electronic device (e.g., the electronic device 300 of FIG. 3), and TX_PWR may be the current transmission power of the antenna of the electronic device. The minimum OBSS-PD threshold value may be -82 dBm, but is not limited thereto.

Referring to the graph of FIG. 5, the electronic device may calculate the OBSS-PD threshold value (OBSS-PD$_{thres}$) based on the current transmission power (TX_PWR) of the antenna. When the calculated OBSS-PD threshold value (OBSS-PD$_{thres}$) is less than the OBSS-PD minimum threshold value (OBSS-PD$_{min}$) (e.g., -82 dBm), the electronic device may determine the OBSS-PD minimum threshold value as the OBSS-PD threshold value (OBSS-PD$_{thres}$). In addition, when the calculated OBSS-PD threshold value (OBSS-PD$_{thres}$) exceeds the OBSS-PD minimum threshold value

(OBSS-PD$_{min}$) (e.g., -82 dBm), the electronic device may determine the OBSS-PD maximum threshold value as the OBSS-PD threshold value (OBSS-PD$_{thres}$).

Referring to Equation 1, the OBSS-PD threshold value may increase as the transmission power of the antenna of the electronic device increases. When the OBSS-PD threshold value increases, the electronic device may determine the channel to be in an idle state to transmit the signal based on spatial reuse even if the intensity of the signal received from the OBSS (e.g., the second access point 220 of FIG. 2) is stronger, but may need to transmit the signal with a lower transmission power.

FIG. 6 is a flowchart of a method for minimizing transmission power during spatial reuse transmission by an electronic device according to various embodiments.

The illustrated method may be performed by an electronic device (e.g., the electronic device 300 of FIG. 3), and the above-described technical features will be omitted below.

According to various embodiments, the electronic device may receive a signal from the second access point (e.g., the second access point 220 of FIG. 2) of the second BSS (or OBSS) having coverage at least partially overlapping the first BSS or another electronic device while in a state of establishing a wireless LAN connection with the first access point (e.g., the second access point 220 of FIG. 2) of the first BSS (or the local BSS). When the intensity of the signal transmitted from the second BSS is less than or equal to a threshold value (e.g., the OBSS-PD$_{thres}$ of FIG. 5), the electronic device may initiate spatial reuse transmission. FIG. 6 illustrates a process of determining the optimal value of the transmission power of the antenna (or the minimum value of the transmission power of the antenna capable of spatial reuse transmission to the OBSS) when the electronic device initiates spatial reuse transmission to the first access point.

According to various embodiments, in operation 610, the electronic device may determine an initial value of the transmission power of the antenna and the modulation coding scheme (MCS) level. According to an embodiment, the initial value of the transmission power of the antenna may be determined based on the transmission power during a signal transmission to the first access point before detecting the signal of the second BSS and/or the transmission power during previous spatial reuse transmission. According to an embodiment, the initial value of the MCS level may be determined based on the MCS level used during a signal transmission to the first access point before detecting the signal of the second BSS and/or the MCS level used during previous spatial reuse transmission.

According to various embodiments, in operation 615, the electronic device may modulate the signal according to the MCS level of the initial value, and may transmit the modulated signal with the transmission power of the initial value to the first access point. According to an embodiment, the electronic device may transmit a packet including a small amount of data, such as a single MAC protocol data unit (MPDU) or a null data packet (NDP).

According to various embodiments, in operation 620, the electronic device may identify that transmission of the signal according to the initial value is successful. For example, when a response transmitted from the first access point is received in response to the transmission of the single MAC protocol data unit (MPDU) or the null data packet (NDP), the electronic device may identify that the transmission is successful.

According to various embodiments, in operation 625, the electronic device may configure the transmission power of the antenna to a value one step lower than the initial value. Here, one step of the transmit power may be 1 dBm, but is not limited thereto. The electronic device may transmit the signal including the single MPDU or the NDP again with the transmit power configured to the one step lower value.

According to various embodiments, in operation 630, the electronic device may identify whether the transmission with transmission power configured to one step lower level of intensity is successful. If the transmission is successful (e.g., "YES" in operation 630), the signal may be transmitted by lowering the transmission power by one step after returning to operation 625. The electronic device may lower the transmit power of the antenna by one step (e.g., 1 dBm) until the signal transmission fails (e.g., no response is received from the first access point).

According to various embodiments, if the transmission fails as a result of lowering the transmission power intensity (e.g., "NO" in operation 630), it is possible to identify whether the currently configured MCS level (e.g., the MCS level of the initial value) is the lowest level in operation 635. For example, in the wireless LAN standard (e.g., IEEE 802.11ax), the MCS indices are defined as 0 to 11, and the electronic device may support at least some of 0 to 11 defined in the standard. According to an embodiment, the electronic device may identify whether the current MCS level is the lowest level among the MCS levels supported by the electronic device.

According to various embodiments, when the current MCS level is the lowest level among the MCS levels supported by the electronic device (e.g., "YES" in operation 635), in operation 640, the electronic device may determine the transmission power and the MCS level at the time of last transmission success as optimal values of the transmission power and the MCS level at the time of spatial reuse. That is, the electronic device may lower the transmission power of the antenna by one step to determine the transmission power at the time of last transmission success in the process of transmitting the signal including the single MPDU or the NDP as the optimal value.

According to various embodiments, when the current MCS level is not the lowest level among the MCS levels supported by the electronic device (e.g., "NO" in operation 635), in operation 645, the electronic device may configure the MCS level to one step lower level. For example, when the electronic device modulates the signal to the current MCS level 3, the signal may be modulated by lowering the MCS level to level 2.

According to various embodiments, in operation 650, the electronic device may modulate the signal to one step lower MCS level and transmit a signal including the single MPDU or the NDP with the transmission power of the recent transmission failure (e.g., the transmission power configured in operation 625 when the transmission fails in operation 630).

According to various embodiments, in operation 655, the electronic device may identify that transmission in operation 650 is successful.

According to various embodiments, if the transmission is successful (e.g., "YES" in operation 655), in operation 660, the electronic device may determine the currently configured transmission power, that is, the transmission power at the time of transmission in operation 650, as the optimal value (or the minimum value of the transmission power of the antenna that may communicate with the OBSS at the time of spatial reuse transmission). In addition, the electronic device may determine the currently configured MCS level, that is, the MCS level used at the time of transmission in operation 650, as the optimal value.

According to various embodiments, if the transmission fails (e.g., "NO" in operation 655), in operation 665, the electronic device may configure the transmission power at the last success, that is, the transmission power one step higher than the transmission power at the time of transmission in operation 650, as the optimal value. In addition, the electronic device may determine the MCS level before lowering the level by one step as the optimal value in operation 645.

According to various embodiments, the electronic device may transmit a signal based on spatial reuse to the first access point according to the optimal value of the transmission power determined in operation 640, operation 660, or operation 665. For example, the electronic device may transmit a signal including an aggregated-MAC protocol data unit (A-MPDU) to the first access point for data communication.

FIG. 7 illustrates example of an operation for minimizing transmission power during spatial reuse transmission by an electronic device according to various embodiments.

According to various embodiments, when a signal is transmitted from a second access point belonging to a second BSS 750 (or OBSS) or another electronic device 300, the electronic device 300 may determine whether to initiate spatial reuse transmission based on the signal intensity.

According to an embodiment, when spatial reuse transmission is initiated, the electronic device 300 may transmit a first signal 712 with the transmission power and the MCS level of the initial value. According to an embodiment, the initial value of the transmission power of the antenna may be determined based on the transmission power during a signal transmission to the first access point (e.g., the first access point 210 of FIG. 2) before detecting the signal of the second BSS and/or the transmission power during previous spatial reuse transmission. According to an embodiment, the initial value of the MCS level may be determined based on the MCS level used during a signal transmission to the first access point before detecting the signal of the second BSS 750 and/or the MCS level used during previous spatial reuse transmission. Hereinafter, an example in which the initial value of the transmission power is -70 dBm and the initial value of the MCS level is 3 is described.

According to an embodiment, when transmission of the first signal 712 is successful, the electronic device 300 may lower the transmission power by one step. For example, one step of the transmission power may be configured to 1 dBm, and in this case, the electronic device 300 may reduce the transmission power to -71 dBm. The electronic device 300 may modulate the MCS level to level 3 and configure the transmission power to -71 dBm to transmit a second signal 714 including a packet including a small amount of data such as the single MAC protocol data unit (MPDU) or the null data packet (NDP).

According to an embodiment, when transmission of the second signal 714 is successful, the electronic device 300 may lower the transmission power by one step. For example, the electronic device 300 may further reduce the transmission power from -71 dBm to -72 dBm. The electronic device 300 may modulate the MCS level to level 3 and configure the transmission power to -72 dBm to transmit a third signal 716 including the single MPDU or the NDP.

According to an embodiment, transmission of the third signal 716 may fail. In this case, the electronic device 300 may configure the MCS level to level 2, one step higher than level 3 at the time of transmission of the third signal 716. The electronic device 300 may modulate the MCS level to level 2 and configure the transmission power to -72 dBm, which is the same as the third signal 716 that failed to transmit, to transmit a fourth signal 718 including the single MPDU or the NDP.

According to an embodiment, transmission of the fourth signal 718 may be successful. In this case, the electronic device 300 may determine the transmission power of -72 dBm as the optimal value of the transmission power when transmitting the fourth signal 718. In addition, the electronic device 300 may determine the MCS level 2 as the optimal value of the MCS level when transmitting the fourth signal 718. Unlike the illustrated example, when the transmission of the fourth signal 718 fails, the electronic device 300 may determine the transmission power of the third signal 716 of -71 dBm that is last successful transmission power as the optimal value of the transmission power. In this case, the electronic device 300 may determine MCS level 3 at the time of transmission of the third signal 716 as the optimal value of the MCS level.

According to an embodiment, the electronic device 300 may configure the transmission power of the antenna to -72 dBm, which is the optimal value of the determined transmission power, and perform spatial reuse transmission. The electronic device 300 may transmit a fifth signal 720 including an aggregated-MAC protocol data unit (A-MPDU) to the first access point for data communication.

FIG. 8 is a flowchart of a method for determining a communicable transmission power during spatial reuse transmission by an electronic device according to various embodiments.

The illustrated method may be performed by an electronic device (e.g., the electronic device 300 of FIG. 3), and the above-described technical features will be omitted below.

According to various embodiments, the electronic device may initiate a spatial reuse transmission when the intensity of a signal received from the second access point of the second BSS (or OBSS) having coverage at least partially overlapping the first BSS or another electronic device is less than or equal to a threshold value (e.g., an OBSS-PD threshold value) while in a state of establishing a wireless LAN connection with the first access point (e.g., the second access point 220 of FIG. 2) of the first BSS (or the local BSS). FIG. 8 discloses a process of determining the optimal value of the transmission power of the antenna in case of a failure in signal transmission when the electronic device initiates spatial reuse transmission to the first access point.

According to various embodiments, in operation 810, the electronic device may determine an initial value of the transmission power of the antenna and the MCS level. According to an embodiment, the initial value of the transmission power of the antenna may be determined based on the transmission power during a signal transmission to the first access point before detecting the signal of the second BSS and/or the transmission power during previous spatial reuse transmission. According to an embodiment, the initial value of the MCS level may be determined based on the MCS level used during a signal transmission to the first access point before detecting the signal of the second BSS and/or the MCS level used during previous spatial reuse transmission.

According to various embodiments, in operation 815, the electronic device may modulate the signal according to the MCS level of the initial value, and may transmit the modulated signal with the transmission power of the initial value to the first access point. According to an embodiment, the electronic device may transmit a packet including a small amount of data, such as a single MAC protocol data unit (MPDU) or a null data packet (NDP).

According to various embodiments, in operation 820, the electronic device may identify that transmission of the signal according to the initial value fails. For example, when a response transmitted from the first access point is not received in response to the transmission of the single MAC protocol data unit (MPDU) or the null data packet (NDP), the electronic device may identify that the transmission fails.

According to various embodiments, in operation 825, the electronic device may identify whether the currently configured MCS level is the lowest level. For example, in the wireless LAN standard (e.g., IEEE 802.11ax), the MCS indices are defined as 0 to 11, and the electronic device may support at least some of 0 to 11 defined in the standard. According to an embodiment, the electronic device may identify whether the current MCS level is the lowest level among the MCS levels supported by the electronic device. When the current MCS level is the lowest level (e.g., "YES" in operation 825), the electronic device may perform operation 855 to be described later.

According to various embodiments, when the current MCS level is not the lowest level (e.g., "NO" in operation 825), in operation 830, the electronic device may configure the MCS level to one step lower level. For example, when the electronic device modulates the signal to the current MCS level 3, the signal may be modulated by lowering the MCS level to level 2.

According to various embodiments, in operation 835, the electronic device may modulate the signal to one step lower MCS level and transmit a signal including the single MPDU or the NDP with the transmission power of the recent transmission failure (e.g., the transmission power of the signal transmitted in operation 815).

According to various embodiments, in operation 840, the electronic device may identify that transmission in operation 835 is successful. When the signal transmission is successful (e.g., "YES" in operation 840), in operation 845, the electronic device may determine the transmission power at the time of successful transmission as the optimal value. In addition, the electronic device may determine the MCS level at the time of successful transmission the optimal value.

According to various embodiments, when the signal transmission in operation 835 fails (e.g., "NO" in operation 840), in operation 850, the MCS level may be reconstructed to the MCS level before one step down. In operation 855, the electronic device may configure the transmit power to one step higher in intensity. One step of the transmission power may be 1 dBm, but is not limited thereto. In operation 860, the electronic device may transmit a signal including the single MPDU or the NDP again with the transmission power configured to the one step higher value.

According to various embodiments, in operation 865, the electronic device may identify that transmission in operation 860 is successful. If the transmission in operation 860 fails (e.g., "NO" in operation 865), the electronic device may return to operation 855 and increase the transmission power by one step. In this way, the electronic device may transmit the signal by increasing the transmit power by one step until the signal transmission is successful.

According to various embodiments, when the signal transmission in operation 860 is successful (e.g., "YES" in operation 855), in operation 870, the electronic device may determine the transmission power at the time of successful transmission as the optimal value. In addition, the electronic device may determine the MCS level at the time of successful transmission the optimal value.

According to various embodiments, the electronic device may transmit a signal based on spatial reuse to the first access point according to the optimal value of the transmission power determined in operation 845 or operation 875. For example, the electronic device may transmit a signal including an aggregated-MAC protocol data unit (A-MPDU) to the first access point for data communication.

FIG. 9 illustrates an operation for determining a communicable transmission power during spatial reuse transmission by an electronic device according to various embodiments.

According to various embodiments, when a signal is transmitted from a second access point (e.g., the second access point 220 of FIG. 2) belonging to a second BSS 950 (or OBSS) or another electronic device, the electronic device 300 may determine whether to initiate spatial reuse transmission based on the signal intensity.

According to an embodiment, when spatial reuse transmission is initiated, the electronic device 300 may transmit a first signal 912 with the transmission power and the MCS level of the initial value. Hereinafter, an example in which the initial value of the transmission power is -70 dBm and the initial value of the MCS level is 3 is described.

According to an embodiment, when transmission of the first signal 912 fails, the electronic device 300 may lower the MCS level by one step. For example, the MCS level may be lowered by one step from the currently configured 3 to 2. The electronic device 300 may modulate the MCS level to level 2 and configure the transmission power to -70 dBm like the first signal 912 to transmit a second signal 914 including a packet including a small amount of data such as the single MAC protocol data unit (MPDU) or the null data packet (NDP).

According to an embodiment, when transmission of the second signal 914 fails, the electronic device 300 may increase the transmission power by one step. For example, the electronic device 300 may increase the transmission power by one step from -70 dBm to -69 dBm. The electronic device 300 may configure the transmission power to -69 dBm to transmit a third signal 916 including the single MPDU or the NDP. According to an embodiment, when the transmission of the second signal 914 fails and the third signal 916 is generated, the electronic device 300 may reconstruct the MCS level to the previous MCS level. For example, the electronic device 300 may reconstruct the MCS level from the second level of the second signal 914 to the previous MCS level of level 3, and transmit the third signal 916 modulated to the MCS level 3.

According to an embodiment, when transmission of the third signal 916 fails, the electronic device 300 may increase the transmission power by one step. For example, the electronic device 300 may increase the transmission power by one step from -69 dBm of the second signal 914 to -69 dBm. The electronic device 300 may modulate to the MCS level to level 3 and configure the transmission power to -68 dBm to transmit a fourth signal 918 including the single MPDU or the NDP.

According to an embodiment, transmission of the fourth signal 918 may be successful. In this case, the electronic device 300 may determine the transmission power of -68 dBm as the optimal value of the transmission power when transmitting the fourth signal 918. In addition, the electronic device 300 may determine the MCS level 3 as the optimal value (or the minimum value with which spatial reuse transmission is possible) of the MCS level when transmitting the fourth signal 718.

According to an embodiment, the electronic device 300 may configure the transmission power of the antenna to -68 dBm, which is the optimal value of the determined transmission power, and perform spatial reuse transmission. The electronic device 300 may transmit a fifth signal 920 including an aggregated-MAC protocol data unit (A-MPDU) to the first access point for data communication.

The electronic device 300 according to various embodiments of the disclosure may include an antenna 310, a communication module 320 that supports wireless LAN communication, and a processor 350 operatively connected to the antenna 310 and the communication module 320.

According to various embodiments, the processor 350 may be configured to perform wireless LAN communication by being connected to a first access point of a first basic service set (BSS) by using the communication module 320, receive a signal transmitted from at least one device belonging to a second BSS having coverage of which at least a portion overlaps the coverage of the first BSS while connected to the first access point, identify whether spatial reuse transmission to the first access point is possible in an environment in which the first BSS and the second BSS overlap each other, based on the signal received from the second BSS, determine the optimal value of the transmission power of the antenna 310 during the spatial reuse transmission when the spatial reuse transmission is possible, and perform spatial reuse transmission to the first access point by using the antenna 310 according to the determined optimal value of the transmission power.

According to various embodiments, in order to determine the optimal value of the transmission power of the antenna 310, the processor 350 may be configured to configure an initial value of the transmission power of the antenna 310, transmit a signal to the first access point through the antenna 310 with a transmission power lower than the initial value when the signal transmission with the transmission power of the initial value to the first access point is successful, and determine the optimal value of the transmission power based on the transmission power at previous successful signal transmission when the signal transmission to the first access point fails.

According to various embodiments, the processor 350 may be configured to retransmit the signal with one step lower transmission power whenever signal transmission to the first access point is successful.

According to various embodiments, the processor 350 may be configured to modulate a signal according to the initial value of a modulation coding scheme (MCS) level by using the communication module 320, and transmit the modulated signal to the first access point with the transmission power of the initial value.

According to various embodiments, the processor 350 may be configured to change the MCS level to a second level which is one step lower than the first level when the signal transmission to the first access point fails in a state where the transmission power of the antenna 310 is configured to a first intensity and the MCS level is configured to a first level, and transmit the signal modulated to the MCS level of the second level to the first access point with the transmission power of the first intensity.

According to various embodiments, the processor 350 may be configured to determine the first intensity as the optimal value of the transmission power of the antenna 310 when the second level modulation and the transmission of the signal with the first intensity transmission power are successful.

According to various embodiments, the processor 350 may be configured to determine the second level as the optimal value of the MCS level when the second level modulation and the transmission of the signal with the first intensity transmission power are successful.

According to various embodiments, the processor 350 may be configured to determine a second intensity, which is one step higher than the first intensity, as the optimal value of the transmission power of the antenna 310 when the second level modulation and the transmission of the signal with the first intensity transmission power fail.

According to various embodiments, in case that the first level is the lowest level among the MCS levels supported by the communication module, the processor 350 may be configured to determine a second intensity, which is one step higher than the first intensity, as the optimal value of the transmission power of the antenna 310 when the first level modulation and the transmission of the signal with the first intensity transmission power fail.

According to various embodiments, the processor 350 may be configured to modulate a signal by configuring the MCS level to the level one step lower than the initial value when the signal transmission with the transmission power of the initial value to the first access point fails, and retransmit the modulated signal with the transmission power of the initial value.

According to various embodiments, the processor 350 may be configured to retransmit the signal with one step higher transmission power whenever signal retransmission fails, and determine the transmission power when the signal transmission is successful as the optimal value of the transmission power of the antenna 310.

According to various embodiments, the processor 350 may be configured to determine the initial value of the transmission power based on the transmission power before detecting the signal of the second BSS or the transmission power during the previous spatial reuse transmission to the first access point.

According to various embodiments, the processor 350 may be configured to identify whether the spatial reuse transmission is possible based on whether the preamble value of the signal received from the second BSS and the intensity of the signal received from the second BSS are less than a threshold value.

According to various embodiments, the processor 350 may be configured to transmit one MAC protocol data unit (MPDU) or null data packet (NDP) to determine the optimal value of the transmission power of the antenna 310.

A method for spatial reuse transmission of the electronic device 300 according to various embodiments of the disclosure may include performing wireless LAN communication by being connected to a first access point of a first basic service set (BSS), receiving a signal transmitted from at least one device belonging to a second BSS having coverage of which at least a portion overlaps the coverage of the first BSS while connected to the first access point, identifying whether spatial reuse transmission to the first access point is possible in an environment in which the first BSS and the second BSS overlap each other, based on the signal received from the second BSS, determining the optimal value of the transmission power of the antenna 310 during the spatial reuse transmission when the spatial reuse transmission is possible, and performing spatial reuse transmission to the first access point by using the antenna 310 according to the determined optimal value of the transmission power.

According to various embodiments, the determining the optimal value of the transmission power may include configuring an initial value of the transmission power of the antenna 310, transmitting a signal to the first access point through the antenna 310 with a transmission power lower than the initial value when the signal transmission with the transmission power of the initial value to the first access point is successful, and determining the optimal value of the transmission power based on the transmission power at previous successful signal transmission when the signal transmission to the first access point fails.

According to various embodiments, the determining the optimal value of the transmission power may include retransmitting the signal with one step lower transmission power whenever signal transmission to the first access point is successful.

According to various embodiments, the determining the optimal value of the transmission power may include changing the MCS level to a second level which is one step lower than the first level and transmitting the signal modulated to the MCS level of the second level to the first access point with the transmission power of the first intensity when the signal transmission to the first access point fails in a state where the transmission power of the antenna 310 is configured to a first intensity and the MCS level is configured to a first level.

According to various embodiments, the determining the optimal value of the transmission power may include determining the first intensity as the optimal value of the transmission power of the antenna 310 when the second level modulation and the transmission of the signal with the first intensity transmission power are successful.

According to various embodiments, the determining the optimal value of the transmission power may include determining a second intensity, which is one step higher than the first intensity, as the optimal value of the transmission power of the antenna 310 when the second level modulation and the transmission of the signal with the first intensity transmission power fail.

According to various embodiments, the method may further include modulating a signal by configuring the MCS level to the level one step lower than the initial value when the signal transmission with the transmission power of the initial value to the first access point fails, and retransmitting the modulated signal with the transmission power of the initial value.

According to various embodiments, the method may include identifying whether the spatial reuse transmission is possible based on whether the preamble value of the signal received from the second BSS and the intensity of the signal received from the second BSS are less than a threshold value.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device comprising:

an antenna;
a communication module configured to support wireless LAN communication; and
a processor operatively connected to the antenna and the communication module,
wherein the processor is configured to:

perform wireless LAN communication by being connected to a first access point of a first basic service set (BSS) by using the communication module;
receive a signal transmitted from at least one device belonging to a second BSS having coverage of which at least a portion overlaps the coverage of the first BSS while connected to the first access point;
identify whether spatial reuse transmission to the first access point is possible in an environment in which the first BSS and the second BSS overlap each other, based on the signal received from the second BSS;
determine the optimal value of the transmission power of the antenna during the spatial reuse transmission in case that the spatial reuse transmission is possible; and
perform spatial reuse transmission to the first access point by using the antenna according to the determined optimal value of the transmission power,
wherein the processor, in order to determine the optimal value of the transmission power of the antenna, is configured to:

configure an initial value of the transmission power of the antenna;
transmit a signal to the first access point through the antenna with a transmission power lower than the initial value in case that the signal transmission with the transmission power of the initial value to the first access point is successful; and
determine the optimal value of the transmission power based on the transmission power at previous successful signal transmission in case that the signal transmission to the first access point fails.

2. The electronic device of claim 1,
wherein the processor is configured to retransmit the signal with one step lower transmission power whenever signal transmission to the first access point is successful.

3. The electronic device of claim 1 or claim 2,
wherein the processor is configured to:

modulate a signal according to the initial value of a modulation coding scheme (MCS) level by using the communication module; and
transmit the modulated signal to the first access point with the transmission power of the initial value.

4. The electronic device of one of claims 1 to 3,
wherein the processor is configured to:

change the MCS level to a second level which is one step lower than the first level in case that the signal transmission to the first access point fails in a state where the transmission power of the antenna is configured to a first intensity and the MCS level is configured to a first level; and
transmit the signal modulated to the MCS level of the second level to the first access point with the transmission power of the first intensity.

5. The electronic device of claim 4,
wherein the processor is configured to determine the first intensity as the optimal value of the transmission power of the antenna in case that the second level modulation and the transmission of the signal with the first intensity transmission power are successful.

**6.** The electronic device of claim 4 or claim 5,
wherein the processor is configured to determine the second level as the optimal value of the MCS level in case that the second level modulation and the transmission of the signal with the first intensity transmission power are successful.

**7.** The electronic device of claim 4,
wherein the processor is configured to determine a second intensity, which is one step higher than the first intensity, as the optimal value of the transmission power of the antenna in case that the second level modulation and the transmission of the signal with the first intensity transmission power fail.

**8.** The electronic device of claim 4,
wherein, in case that the first level is the lowest level among the MCS levels supported by the communication module, the processor is configured to determine a second intensity, which is one step higher than the first intensity, as the optimal value of the transmission power of the antenna when the first level modulation and the transmission of the signal with the first intensity transmission power fail.

**9.** The electronic device of claim 1,
wherein the processor is configured to:

modulate a signal by configuring the MCS level to the level one step lower than the initial value in case that the signal transmission with the transmission power of the initial value to the first access point fails; and
retransmit the modulated signal with the transmission power of the initial value.

**10.** The electronic device of claim 9,
wherein the processor is configured to:

retransmit the signal with one step higher transmission power whenever signal retransmission fails; and
determine the transmission power in case that the signal transmission is successful as the optimal value of the transmission power of the antenna.

**11.** The electronic device of one of claims 1 to 10,
wherein the processor is configured to determine the initial value of the transmission power based on the transmission power before detecting the signal of the second BSS or the transmission power during the previous spatial reuse transmission to the first access point.

**12.** The electronic device of one of claims 1 to 11,
wherein the processor is configured to identify whether the spatial reuse transmission is possible based on whether the preamble value of the signal received from the second BSS and the intensity of the signal received from the second BSS are less than a threshold value.

**13.** The electronic device of one of claims 1 to 12,
wherein the processor is configured to transmit one MAC protocol data unit (MPDU) or null data packet (NDP) to determine the optimal value of the transmission power of the antenna.

**14.** A method for spatial reuse transmission of an electronic device, the method comprising:

performing wireless LAN communication by being connected to a first access point of a first basic service set (BSS);
receiving a signal transmitted from at least one device belonging to a second BSS having coverage of which at least a portion overlaps the coverage of the first BSS while connected to the first access point;
identifying whether spatial reuse transmission to the first access point is possible in an environment in which the first BSS and the second BSS overlap each other, based on the signal received from the second BSS;
determining the optimal value of the transmission power of the antenna during the spatial reuse transmission in case that the spatial reuse transmission is possible; and
performing spatial reuse transmission to the first access point by using the antenna according to the determined optimal value of the transmission power,
wherein determining the optimal value of the transmission power comprises:

configuring an initial value of the transmission power of the antenna;

transmitting a signal to the first access point through the antenna with a transmission power lower than the initial value in case that the signal transmission with the transmission power of the initial value to the first access point is successful; and

determining the optimal value of the transmission power based on the transmission power at previous successful signal transmission in case that the signal transmission to the first access point fails.

15. The method of claim 15,

wherein the determining the optimal value of the transmission power comprises:

changing the MCS level to a second level which is one step lower than the first level and transmitting the signal modulated to the MCS level of the second level to the first access point with the transmission power of the first intensity in case that the signal transmission to the first access point fails in a state where the transmission power of the antenna is configured to a first intensity and the MCS level is configured to a first level;

determining the first intensity as the optimal value of the transmission power of the antenna in case that the second level modulation and the transmission of the signal with the first intensity transmission power are successful; and

determining a second intensity, which is one step higher than the first intensity, as the optimal value of the transmission power of the antenna in case that the second level modulation and the transmission of the signal with the first intensity transmission power fail.

# FIG. 1

ELECTRONIC DEVICE 101

INPUT MODULE 150

SOUND OUTPUT MODULE 155

DISPLAY MODULE 160

BATTERY 189

POWER MANAGEMENT MODULE 188

PROCESSOR 120

MAIN PROCESSOR 121

AUXILIARY PROCESSOR 123

AUDIO MODULE 170

HAPTIC MODULE 179

SENSOR MODULE 176

CAMERA MODULE 180

INTERFACE 177

MEMORY 130

VOLATILE MEMORY 132

NON-VOLATILE MEMORY 134

INTERNAL MEMORY 136

EXTERNAL MEMORY 138

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

CONNECTION TERMINAL 178

PROGRAM 140

APPLICATIONS 146

MIDDLEWARE 144

OPERATING SYSTEM 142

100

SECOND NETWORK 199

ELECTRONIC DEVICE 104

FIRST NETWORK 198

ELECTRONIC DEVICE 102

SERVER 108

EP 4 593 441 A1

# FIG. 2

FIG. 3

FIG. 4

410
HE-SIG-A

412
414

| ... | BSS Color | ... | Spatial Reuse | ... |

300
STA 1
[BSS1]

SR Tx

RSS $_{STA2 \rightarrow STA1}$  < OBSS-PD threshold
(dynamically adjustable)

450
STA 2/ AP2
[BSS2]

OBSS Tx

# FIG. 5

OBSS-PD threshold

OBSS-PD$_{max}$ = -62 dBm

OBSS-PD$_{min}$ = -82 dBm

OBSS-PD$_{thres}$ = OBSS-PD$_{min}$ + (TX_PWR$_{ref}$ − TX_PWR)

1 or 5 dBm

TX_PWR$_{ref}$ (21 or 25 dBm)

TX_PWR

TX_PWR (dBm)

FIG. 6

START

CONFIGURE INITIAL VALUE OF TRANSMISSION POWER AND MCS LEVEL — 610

TRANSMIT SINGLE MPDU OR NDP — 615

TRANSMISSION WITH INITIAL VALUE IS SUCCESSFUL — 620

CONFIGURE TRANSMISSION POWER TO ONE STEP LOWER INTENSITY — 625

IS TRANSMISSION SUCCESSFUL? — 630   YES

NO

IS MCS LEVEL IN USE LOWEST LEVEL? — 635

YES

NO

CONFIGURE MCS LEVEL TO ONE STEP LOWER LEVEL — 645

TRANSMIT SINGLE MPDU OR NDP — 650

IS TRANSMISSION SUCCESSFUL? — 655   NO

YES

DETERMINE TRANSMISSION POWER AT TIME OF LAST TRANSMISSION SUCCESS AS OPTIMAL VALUE OF TRANSMISSION POWER — 640

DETERMINE TRANSMISSION POWER AT TIME OF LAST TRANSMISSION SUCCESS AS OPTIMAL VALUE OF TRANSMISSION POWER — 665

DETERMINE CURRENTLY CONFIGURED TRANSMISSION POWER AS OPTIMAL VALUE — 660

END

EP 4 593 441 A1

# FIG. 7

Legend:
- ▨ A-MPDU Tx
- ▨ Single MPDU or NDP Tx

**Tx with lower power** ①
**Tx with lower power** ②
**Tx with lower power** ③
**Tx with lower power** ④
**Tx with lower power** ⑤

300 — STA1 [BSS1]

SR Tx 712
SR Tx 714
SR Tx 716
SR Tx 718
SR Tx 720

750 — STA2 [BSS2]

OBSS Tx 760

# FIG. 8

START

CONFIGURE INITIAL VALUE OF TRANSMISSION POWER AND MCS LEVEL — 810

TRANSMIT SINGLE MPDU OR NDP — 815

TRANSMISSION WITH INITIAL VALUE FAILS — 820

IS MCS LEVEL IN USE LOWEST LEVEL? — 825
YES
NO

CONFIGURE MCS LEVEL TO ONE STEP LOWER LEVEL — 830

TRANSMIT SINGLE MPDU OR NDP — 835

IS TRANSMISSION SUCCESSFUL? — 840
YES

NO

RECONSTRUCT MCS LEVEL TO PREVIOUS LEVEL — 850

CONFIGURE TRANSMIT POWER TO ONE STEP HIGHER IN INTENSITY — 855

TRANSMIT SINGLE MPDU OR NDP — 860

IS TRANSMISSION SUCCESSFUL? — 865
NO
YES

DETERMINE TRANSMISSION POWER AT TIME OF TRANSMISSION SUCCESS AS OPTIMAL VALUE — 845

DETERMINE TRANSMISSION POWER AT TIME OF TRANSMISSION SUCCESS AS OPTIMAL VALUE — 870

END

# FIG. 9

□ A-MPDU Tx

▨ Single MPDU or NDP Tx

300

STA1 (BSS1)

① Tx with lower power
② Tx with higher power
③ Tx with higher power
④ Tx with determined power and MCS ⑤

SR Tx ✕···  SR Tx ✕···  SR Tx ✕···  SR Tx ◯···  SR Tx

912    914    916    918    920

950

STA2 (BSS2)

OBSS Tx

960

EP 4 593 441 A1

## INTERNATIONAL SEARCH REPORT

<table>
<tr><td>International application No.<br><br>**PCT/KR2023/016916**</td></tr>
</table>

**A.    CLASSIFICATION OF SUBJECT MATTER**

**H04W 16/02**(2009.01)i; **H04W 52/22**(2009.01)i; **H04L 1/00**(2006.01)i; **H04W 84/12**(2009.01)i

According to International Patent Classification (IPC) or to both national classification and IPC

**B.    FIELDS SEARCHED**

Minimum documentation searched (classification system followed by classification symbols)

H04W 16/02(2009.01); H04W 16/10(2009.01); H04W 72/08(2009.01); H04W 74/08(2009.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: wireless local area network(WLAN), spatial reuse(SR), basic service set(BSS), coverage, antenna, transmit power, access point(AP), success, fail, optimization

**C.    DOCUMENTS CONSIDERED TO BE RELEVANT**

| Category* | Citation of document, with indication, where appropriate, of the relevant passages | Relevant to claim No. |
|---|---|---|
| Y | US 2021-0378054 A1 (QUALCOMM INCORPORATED) 02 December 2021 (2021-12-02)<br>See paragraphs [0033]-[0081]; and figures 1-6. | 1-15 |
| Y | US 2020-0288323 A1 (CISCO TECHNOLOGY, INC.) 10 September 2020 (2020-09-10)<br>See paragraphs [0035]-[0061]; and figure 6. | 1-15 |
| A | KR 10-2020-0042774 A (SAMSUNG ELECTRONICS CO., LTD.) 24 April 2020 (2020-04-24)<br>See paragraphs [0016]-[0161]; and figures 1-12. | 1-15 |
| A | KR 10-2016-0135746 A (LG ELECTRONICS INC.) 28 November 2016 (2016-11-28)<br>See paragraphs [0025]-[0142]; and figures 1-12. | 1-15 |
| A | EP 3478020 A1 (MEDIATEK SINGAPORE PTE. LTD.) 01 May 2019 (2019-05-01)<br>See paragraphs [0024]-[0078]; and figures 1-5. | 1-15 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **29 January 2024** | **30 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016916**

| Patent document cited in search report | | | Publication date (day/month/year) | Patent family member(s) | | | Publication date (day/month/year) |
|---|---|---|---|---|---|---|---|
| US | 2021-0378054 | A1 | 02 December 2021 | None | | | |
| US | 2020-0288323 | A1 | 10 September 2020 | US | 11153760 | B2 | 19 October 2021 |
| KR | 10-2020-0042774 | A | 24 April 2020 | US | 2021-0360419 | A1 | 18 November 2021 |
| | | | | WO | 2020-080703 | A1 | 23 April 2020 |
| KR | 10-2016-0135746 | A | 28 November 2016 | BR | 112016025453 | A2 | 15 August 2017 |
| | | | | CN | 106465423 | A | 22 February 2017 |
| | | | | CN | 106465423 | B | 18 October 2019 |
| | | | | EP | 3139690 | A1 | 08 March 2017 |
| | | | | EP | 3139690 | B1 | 14 June 2023 |
| | | | | JP | 2017-514423 | A | 01 June 2017 |
| | | | | JP | 6321283 | B2 | 09 May 2018 |
| | | | | MX | 2016013761 | A | 02 February 2017 |
| | | | | MX | 362025 | B | 04 January 2019 |
| | | | | RU | 2641228 | C1 | 16 January 2018 |
| | | | | US | 10117270 | B2 | 30 October 2018 |
| | | | | US | 10638511 | B2 | 28 April 2020 |
| | | | | US | 2017-0041952 | A1 | 09 February 2017 |
| | | | | US | 2019-0029038 | A1 | 24 January 2019 |
| | | | | WO | 2015-167290 | A1 | 05 November 2015 |
| EP | 3478020 | A1 | 01 May 2019 | EP | 3478020 | B1 | 15 December 2021 |
| | | | | TW | 201924475 | A | 16 June 2019 |
| | | | | TW | I693858 | B | 11 May 2020 |
| | | | | US | 10785798 | B2 | 22 September 2020 |
| | | | | US | 11503638 | B2 | 15 November 2022 |
| | | | | US | 11533756 | B2 | 20 December 2022 |
| | | | | US | 2019-0124695 | A1 | 25 April 2019 |
| | | | | US | 2020-0413445 | A1 | 31 December 2020 |
| | | | | US | 2020-0413446 | A1 | 31 December 2020 |

Form PCT/ISA/210 (patent family annex) (July 2022)